# EUROPÄISCHE PATENTSCHRIFT

(11) **EP 1 342 660 B1**
(45) Veröffentlichungstag und Bekanntmachung des Hinweises auf die Patenterteilung: **26.09.2012**
(21) Anmeldenummer: 03003816.0
(22) Anmeldetag: 20.02.2003
(51) Int. Cl.: B62M 11/16

(54) **Steuerung von Kupplungen, insbesondere von solchen für Antriebsnaben in Fahrrädern**
Clutch control, in particular for bicycle hub transmissions
Système de contrôle pour des embrayages, notamment pour moyeu de bicyclette

(30) Priorität: 07.03.2002 DE 10210201
(43) Veröffentlichungstag der Anmeldung: 10.09.2003
(73) Patentinhaber: SRAM Deutschland GmbH, 97404 Schweinfurt (DE)
(72) Erfinder: Steuer, Werner, 97424 Schweinfurt (DE); Kohaupt, Michael, 97469 Gochsheim (DE); Pehse, Gunter, 97464 Niederwerrn (DE)

(56) Entgegenhaltungen:
- AT-B- 166 758
- DE-A1- 3 432 124
- US-A- 3 257 868
- US-A- 3 555 932
- US-A- 5 556 354

## Beschreibung

Die Erfindung betrifft eine Kupplung zum Gangwechsel in einem Getriebe mit einem treibenden Kupplungsteil und mindestens einem angetriebenen Kupplungsteil, wobei das eine der Kupplungsteile ein bewegliches Koppelelement und das andere der Kupplungsteile ein Gegenprofil mit mindestens einer Ausnehmung zur Aufnahme einer Antriebskante des Koppelelements aufweist und wobei die Antriebskante des beweglichen Koppelelements in die Ausnehmungen hinein oder aus den Ausnehmungen heraus bewegt werden kann.

Gemäß der deutschen Offenlegungsschrift DE 34 32 124 A1 sind bei einem Steuermechanismus einer Mehrgangfahrradschaltnabe mit Übertragungsklinken und einem Betätigungsglied für die Bewegung der Klinken aus der angehobenen Position, in welcher die Klinken im Eingriff mit einer Klinkenradverzahnung getriebener Glieder sind, in die abgesenkte Position, in welcher die Klinken außer Eingriff mit den Klinkenradverzahnungen sind, Schubglieder vorgesehen, welche in Zusammenhang mit der Bewegung des Betätigungsgliedes wirken, um die Übertragungsklinken in die abgesenkten Positionen zu bewegen. Die Schubglieder sind jeweils neben den entsprechenden Übertragungsgliedern angeordnet und mit einem Energiespeicher versehen, der abgebogen wird, wenn bei Eingriff der Übertragungsklinke mit der zugehörigen Klinkenradverzahnung unter einer einen vorbestimmten Wert übersteigenden Belastung das Betätigungsglied betätigt wird, wodurch auf die Übertragungsklinke eine Stellkraft ausgeübt wird, die bestrebt ist, die Klinke in die abgesenkte Position zu bewegen. Die Schaltnabe kann somit auch dann betätigt werden, wenn das Fahrrad angetrieben ist und erlaubt einen automatischen Gangwechsel bei Verringerung der Antriebskraft.

Während das Schubglied als Energiespeicher wirkt und im Schaltungsfalle die Klinke dann in die abgesenkte Position bringt, wenn sie die Kraft einer Feder übersteigt und wenn die Antriebsbelastung unter einen bestimmten Wert sinkt, so wirkt ein Beeinflussungselement gemäß dem vorliegenden Erfindungsvorschlag im Laufzustand "Antrieb" auf ein Koppelelement an einem treibenden Kupplungsteil dahingehend, dass eine Antriebskante des Koppelelements mit einem Gegenprofil eines angetriebenen Kupplungsteils in Eingriff kommt und dass andererseits im Laufzustand "Leerlauf" die Antriebskante des Koppelelements aus dem Gegenprofil des angetriebenen Kupplungsteils ausgesteuert wird. Das Beeinflussungselement ist sowohl mit dem angetriebenen Kupplungsteil wie auch mit dem Koppelelement verbunden, wobei eine dieser Verbindungen vorzugsweise eine Reibverbindung ist, die ausgehend von dem angetriebenen Kupplungsteil entweder zwischen diesem und dem Beeinflussungselement oder aber zwischen dem Beeinflussungselement und dem Koppelelement angeordnet ist. Es geht hier in erster Linie um ein sicheres In-Eingriff-Bringen des Koppelelements in das Gegenprofil des angetriebenen Kupplungsteils im Laufzustand "Antrieb" und um ein sicheres Außer-Eingriff-Bringen des Koppelelements aus dem Gegenprofil des angetriebenen Kupplungsteils im Laufzustand "Leerlauf".

Für den Fall einer Schaltung unter Eingriffsbelastung der Übertragungsklinke hat die DE3432124A1 den wenig tauglichen Vorschlag, das Aussteuern der Übertragungsklinke aus der Sperrverzahnung durch einen Energiespeicher am Schubglied bewerkstelligen zu lassen, dessen Ausrückkraft noch dazu durch die Kraft der Feder vermindert wird; weiß man doch, dass eine unter Eingriffsbelastung stehende Übertragungsklinke sich nur unter Einsatz hoher Ausrückkräfte aussteuern lässt. Für diesen Fall ist in dem vorliegenden Erfindungsvorschlag ein Steuerelement vorgesehen, das in der Lage ist, das Koppelelement bei praktisch jeder Eingriffsbelastung aus seinem Eingriff in dem Gegenprofil des angetriebenen Kupplungsteils aus zu steuern. Es handelt sich um ein unter das Koppelelement in dessen Bewegungsebene schiebbares rohrförmiges Teil, das an seinen Stirnflächen Vertiefungen aufweist, in die Steuervorsprünge an der Unterseite des Koppelelements passen, wenn das Steuerelement axial gegen das Koppelelement verschoben wird. Hat das Steuerelement eine zum Koppelelement verschiedene Drehzahl, so wird der jeweilige Steuervorsprung aus der Vertiefung heraus gezwungen und so das Koppelelement außer Eingriff mit dem Gegenprofil des angetriebenen Kupplungsteils gebracht. Es ist offensichtlich, dass die Energie zum Aussteuern des Koppelelements aus der Antriebsenergie abgezweigt wird, die im Falle der Verwendung der Kupplung in einer Mehrgangfahrradschaltnabe der Fahrer des Fahrrades aufzubringen hat. Eine solche Aussteuerung unter Eingriffsbelastung ist besonders vorteilhaft für den Fall der Verwendung eines doppelt wirkenden Koppelelements, das für den Laufzustand "Antrieb" in beide Drehrichtungen in Frage kommt. Ein solches doppelt wirkendes Koppelelement wird in Getrieben benötigt, in denen das angetriebene Kupplungsteil das Eingangsdrehmoment gleichsinnig weitergibt, in denen aber durch Veränderung des Kraftflusspfades im Schaltungsfalle ein nach der Gegendrehrichtung weisendes Abstützmoment aufgefangen werden muss.

Die Konstruktion des Koppelelements erweist sich insofern als besonders vorteilhaft, als es auf einer Achse zwei - oder mehrmals hintereinander angeordnet sein kann. Zwischen zwei hintereinander angeordneten Koppelelementen wird vorzugsweise ein Steuerelement mit Vertiefungen an beiden Stirnseiten, welche zum Schalten mehrerer Gangstufen einmal mit dem ersten Koppelelement und einmal mit dem zweiten Koppelelement in Wirkverbindung gebracht werden, angeordnet. Während bei der Verbindung des Steuerelements mit dem ersten Koppelelement dieses unabhängig von der Eingriffsbelastung aus dem Gegenprofil des angetriebenen Kupplungsteils ausgehoben und in den Laufzustand "Leerlauf" geschaltet wird, wird das zweite Koppelelement freigegeben, wodurch das Beeinflussungselement dort den Laufzustand "Antrieb" herstellen kann. Hier ist unterstellt, dass auf jedes der Koppelelemente ein Beeinflussungselement wirkt, um zur Herstellung des Laufzustandes "Antrieb" die jeweilige Antriebskante in das Gegenprofil des angetriebenen Kupplungsteils zu schieben. Wie aus den vorgenannten Ausführungen ersichtlich, sind also die Funktionen verteilt, nämlich das Einsteuern des Koppelelements in das Gegenprofil auf das Beeinflussungselement und das Aussteuern des Koppelelements aus dem Gegenprofil auf das Steuerelement.

Die vorliegende Erfindung hat es sich somit zur Aufgabe gemacht, eine Kupplung zum Gangwechsel in einem Getriebe mit einem treibenden Kupplungsteil und mindestens einem angetriebenen Kupplungsteil zu schaffen, die mindestens ein Koppelelement am treibenden Kupplungsteil in ein Gegenprofil des angetriebenen Kupplungsteils unabhängig von der Eingriffsbelastung einsteuern und aus diesem Gegenprofil wieder aussteuern kann, wobei in den Laufzuständen "Leerlauf" und "Antrieb" keine nennenswerten Laufgeräusche entstehen sollen.

Die Lösung dieser Aufgabe ist in den Kennzeichen des Anspruches 1 beschrieben. Ausgestaltungen sind den Unteransprüchen zu entnehmen.

Anhand von Skizzen und Zeichnungen werden einige Ausführungsbeispiele von Kupplungen zum Gangwechsel in einem Getriebe erläutert. Es zeigen:
- Fig.1: ein doppelt wirkendes Koppelelement mit Steuervorsprüngen, welches sowohl der Wirkung eines Beeinflussungselements als auch der Wirkung eines Steuerelements ausgesetzt ist;
- Fig.2: ein Steuerelement mit Vertiefungen im Bereich seiner beiden Stirnseiten zur Steuerung des Koppelelements über dessen Steuervorsprünge.

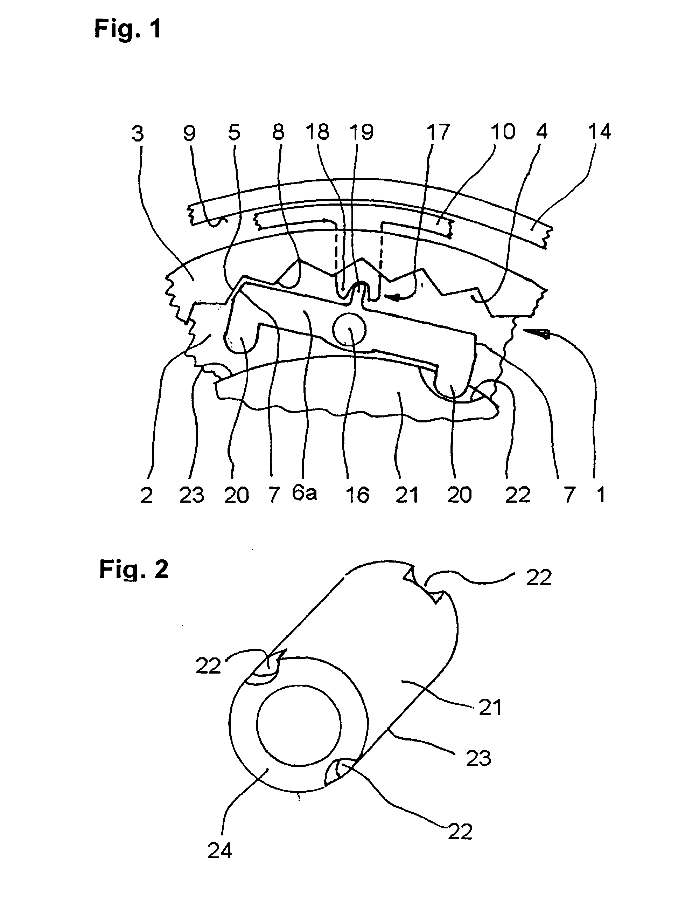

Aus Fig.1 geht eine Kupplung 1, umfassend das treibende Kupplungsteil 2, ein doppelt wirkendes Koppelelement 6a, das angetriebene Kupplungsteil 3, das Getriebeteil 14 und ein Beeinflussungselement 10, hervor, die in jeder der beiden Drehrichtungen den Laufzustand "Antrieb" herstellen kann, sofern das Getriebeteil 14 in der Drehrichtung, in der angetrieben werden soll, relativ zu dem treibenden Kupplungsteil 2 einen entgegengesetzten Drehsinn aufweist. Das Koppelelement (6a) ist mit dem treibenden Kupplungsteil (2) über den Bolzen (16) schwenkbar verbunden und weist in beide Drehrichtungen wirkend je eine Antriebskante (7), je einen Steuervorsprung (20) sowie einen Fügekontur (19) auf. Diese Fügekontur 19 stellt den ersten Teil einer Mitnehmerverbindung 17 zu einem
Beeinflussungselement 10 dar, deren zweiter Teil ein Mitnehmer 18 am Beeinflussungselement 10 ist. Das Beeinflussungselement 10 ist ringförmig ausgebildet und steht mit einer Friktionslaufbahn 9 an dem in Relativdrehung zum Koppelelement 6a befindlichen Getriebeteil 14 in Reibverbindung. Wie aus Fig.4 hervor geht, wird das Koppelelement 6a je nach Drehrichtung des in Relativdrehung zum Koppelelement 6a befindlichen Getriebeteils 14 zum das Koppelelement 6a tragenden Kupplungsteil 2 mit dem angetriebenen Kupplungsteil 3 entweder in der einen oder in der anderen Drehrichtung eine drehfeste Verbindung dadurch eingehen, dass die Antriebskante 7 in die Gegenverzahnung 8 einschwenkt und diese antreibt. Neben diesen beiden Gangstufen kann unabhängig von der Eingriffsbelastung und der Drehrichtung im Getriebe der Laufzustand "Leerlauf" durch ein Steuerelement 21 hergestellt werden, welches rohrförmig ausgebildet ist, immer eine relativ zum treibenden Kupplungsteil 2 verschiedene Drehzahl hat und unter das Koppelelement 6a geschoben werden kann. Dieses Steuerelement 21 ist vorzugsweise um eine zentrale Getriebeachse angeordnet, wodurch es in axialer Richtung von außerhalb des Getriebes betätigt werden kann. An einer Stirnseite des Steuerelements 21 ist mindestens eine Vertiefung 22 angeordnet, in die ein Steuervorsprung 20 des Koppelelements 6a passt, wenn dieses nach radial innen verschwenkt worden ist. Das Koppelelement 6a wird - wie bereits geschildert - im Uhrzeigersinn um den Bolzen 16 verdreht, wenn das treibende Kupplungsteil 2 gegen den Uhrzeigerdrehsinn angetrieben wird, wodurch die gemäß Fig.4 linke Antriebskante 7 in eine Ausnehmung 4 des Gegenprofils 8 gegen die Antriebsflanke 5 verschwenkt wird. Bei dieser Bewegung wird der gemäß Fig.4 rechte Steuervorsprung 20 nach radial innen verschwenkt und nimmt eine Position ein, in der er genau in die Vertiefung 22 des Steuerelements 21 passt. Während des Betriebs des Getriebes im Laufzustand "Antrieb" - einerlei in welcher Drehrichtung - wird die Stirnseite des Steuerelements 21 in Richtung gegen das Koppelelement 6a verschoben, wodurch es bei den zueinander unterschiedlichen Drehzahlen des Steuerelements 21 und des treibenden Kupplungselements 2 an bestimmten Stellen des Umfangs zur Deckungsgleiche zwischen der Vertiefung 22 und dem vorerwähnten Steuervorsprung 20 kommt. Der Steuervorsprung 20 wird angehoben, wodurch sich das Koppelelement 6 aus dem Eingriffsverband der Antriebskante 7 mit der Antriebsflanke 5 löst und in den Laufzustand "Leerlauf" verschwenkt wird, da der andere Steuervorsprung 20 in diesem Moment der Schaltung gegen einen Außendurchmesser 23 stößt. Wird das Steuerelement 21 bei diesem Schaltvorgang weiter unter das Koppelelement 6a geschoben, so können die mit einer nur geringen Tiefe ausgestatteten Vertiefungen 22 nicht mehr wirksam werden und der Laufzustand "Leerlauf" ist stabil. Der Laufzustand "Antrieb" wird durch Zurückfahren des Steuerelements 21 bewirkt, was dem Beeinflussungselement 10 die Möglichkeit gibt, die eine oder die andere Antriebskante 7 in Eingriff mit dem Gegenprofil 8 zu bringen.

Fig.2 zeigt ein Steuerelement 21, das rohrförmig ausgebildet ist, einen Außendurchmesser 23 und an jeder seiner Stirnseiten 24 Vertiefungen 22 aufweist. Werden in einem Getriebe zwei in axialer Richtung gesehen hintereinander liegende treibende Kupplungsteile 2 mit jeweils daran angeordneten Koppelelementen 6a benötigt, so wird ein Steuerelement 21a mit zwei Stirnseiten 24 vorzugsweise zwischen diesen angeordnet und in der Länge so dimensioniert, dass entweder für eines der beiden Koppelelemente 6a der Laufzustand "Antrieb" und für das andere der Laufzustand "Leerlauf herrscht, oder dass sich beide Koppelelemente 6a im Laufzustand "Leerlauf befinden. Aus Gründen des inneren Kräftegleichgewichts wird vorgeschlagen, an einem treibenden Kupplungselement 2 zwei Koppelelemente 6a gegenüber liegend anzuordnen, wodurch sich selbstverständlich auch für das Steuerelement 21 die Notwendigkeit ergibt, deckungsgleich hierzu zwei Vertiefungen 22 an den Stirnseiten 24 anzuordnen. Es hat sich gezeigt, dass es zweckmäßig ist, die Vertiefungen 22 der einen Stirnseite 24 in der Achsprojektion gesehen nicht deckungsgleich, sondern versetzt gegeneinander anzuordnen, was den Gleichlauf des Getriebes fördert.

### Bezugszeichenliste

- 1: Kupplung
- 2: Treibendes Kupplungsteil
- 3: Angetriebenes Kupplungsteil
- 4: Ausnehmung
- 5: Antriebsflanke
- 6a: Koppelelement
- 7: Antriebskante
- 8: Gegenprofil
- 9: Friktionslaufbahn
- 10: Beeinflussungselement
- 14: Getriebeteil
- 16: Bolzen
- 17: Mitnehmerverbindung
- 18: Mitnehmer
- 19: Fügekontur
- 20: Steuervorsprung
- 21: Steuerelement
- 22: Vertiefung
- 23: Außendurchmesser
- 24: Stirnseite

## Patentansprüche

1. Kupplung zum Gangwechsel in einem Schaltnabengetriebe mit einem treibenden Kupplungsteil und mindestens einem angetriebenen Kupplungsteil, wobei das eine der Kupplungsteile ein bewegliches Koppelelement und das andere der Kupplungsteile ein Gegenprofil mit mindestens einer Ausnehmung zur Aufnahme einer Antriebskante des Koppelelements aufweist und wobei die Antriebskante des beweglichen Koppelelements in die Ausnehmungen hinein oder aus den Ausnehmungen heraus bewegt werden kann,
**dadurch gekennzeichnet,**
**dass** mindestens ein Koppelelement (6a) mit dem treibenden Kupplungsteil (2) über einen Bolzen (16) schwenkbar verbunden ist und in beide Drehrichtungen wirkend je eine Antriebskante (7), je einen Steuervorsprung (20) sowie eine Fügekontur (19) aufweist, wobei das Koppelelement (6a) zum einen über ein, mit einer Friktionslaufbahn (9) am Getriebeteil (14) reibschlüssig in Verbindung stehenden, Beeinflussungselement (10), das mit der Fügekontur (19) eine Mitnehmerverbindung (17) bildet, in jede Drehrichtung den Laufzustand "Antrieb"herstellen kann und zum anderen über ein Steuerelement (21, 21a), in dessen Vertiefung (22) ein Steuervorsprung (20) des Koppelelementes (6a) eingreifen kann, unabhängig von der Eingriffsbelastung und der Drehrichtung im Getriebe der Laufzustand "Leerlauf' hergestellt werden kann.

2. Kupplung nach Anspruch 1,
**dadurch gekennzeichnet,**
**dass** der Laufzustand "Antrieb" in beide Drehrichtungen durch das Zusammenwirken einer der beiden Antriebskanten (7) des Koppelelements (6a) mit ein und demselben Gegenprofil (8) oder aber mit den Gegenprofilen (8) zweier verschiedener Kupplungsteile (3) hergestellt wird.

3. Kupplung nach Anspruch 1,
**dadurch gekennzeichnet,**
**dass** das Beeinflussungselement (10) mit einem Mitnehmer (18), der zusammen mit der Fügekontur (19) die Mitnehmerverbindung (17) bildet, ausgestattet und ringförmig ausgebildet ist, wobei das Beeinflussungselement (10) mit der Friktionslaufbahn (9) an einem in Relativdrehung zum Koppelelement (6a) befindlichen Getriebeteil (3, 14) in Reibschlussverbindung steht.

4. Kupplung nach Anspruch 1,
**dadurch gekennzeichnet,**
**dass** zur Steuerung des Koppelelementes (6a) mindestens eine Vertiefung (22) am Ende (24) des drehfesten aber axial verschiebbaren Steuerelementes (21) angeordnet ist, das zum Kupplungsteil (2), welches das Koppelelement (6a) trägt, eine Relativdrehzahl aufweisen muss, um die Vertiefung (22) unter einen Steuervorsprung (20) schieben zu können.

5. Kupplung nach Anspruch 1,
**dadurch gekennzeichnet,**
**dass** das Koppelelement (6a) je nach Drehrichtung eines der in Relativdrehung zum Koppelelement (6a) befindlichen Getriebeteile (3, 14) zum, das Koppelelement (6a) tragenden, Kupplungsteil (2) entweder in der einen oder in der anderen Drehrichtung eine drehfeste Verbindung eingehen kann, dass es aber auch im Laufzustand "Leerlauf" durch die Auflage beider Steuervorsprünge (20) des Koppelelements (6a) auf einem Außendurchmesser (23) am Steuerelement (21) gehalten werden kann.

6. Kupplung nach Anspruch 1,
**dadurch gekennzeichnet,**
**dass** zwei, jeweils mindestens ein Koppelelement (6a) tragende, treibende Kupplungsteile (2) in axialer Richtung gesehen auf einer Getriebeachse hintereinander liegend angeordnet sind, wobei die Koppelelemente (6a) zum einen mit je einem Beeinflussungselement (10) in den Laufzustand "Antrieb" gesteuert werden können und zum anderen zur Steuerung der Koppelelemente (6) in den Laufzustand "Leerlauf" ein gemeinsames, drehfestes aber axial verschiebbares Steuerelement (21) zwischen den beiden treibenden Kupplungsteilen (2) angeordnet ist.

7. Kupplung nach Anspruch 6,
**dadurch gekennzeichnet,**
**dass** das Steuerelement (21) zur Sicherung des Laufzustandes "Leerlauf" bei dem betreffenden Koppelelement (6a) in dessen Schwenkebene geschoben wird, wodurch der Außendurchmesser (23) des Steuerelementes (21) einen Eingriff des Koppelelementes (6a) in das Gegenprofil (8) verhindert, während das andere Koppelelement (6a) durch das Beeinflussungselement (10) in den jeweils erforderlichen Eingriff gebracht wird.

8. Kupplung nach Anspruch 6,
**dadurch gekennzeichnet,**
**dass** zur Steuerung der Koppelelemente (6a) in die Laufstellung "Leerlauf" durch das Steuerelement (21) eine Relativdrehzahl zwischen dem Steuerelement (21) und den Kupplungsteilen (2) benötigt wird, um den Steuervorsprung (20) am Koppelelement (6a) aus der entsprechenden Vertiefung (22) an den Enden (24) des Steuerelementes (21) auf das Niveau des Außendurchmessers (23) anheben zu können.

9. Kupplung nach Anspruch 8,
**dadurch gekennzeichnet,**
**dass** das Steuerelement (21) rohrförmig ausgebildet ist und an seinen beiden Stirnseiten (24) jeweils mindestens eine Vertiefung (22) aufweist, mit der wechselweise die im Eingriff mit dem Gegenprofil (8) befindlichen Koppelelemente (6a) ausgehoben und in den Laufzustand "Leerlauf" gebracht werden können.

10. Kupplung nach Anspruch 9,
**dadurch gekennzeichnet,**
**dass** die Vertiefungen (22) an der einen Stirnseiten (24) nicht deckungsgleich, sondern versetzt zu den Vertiefungen (22) der anderen Stirnseite angeordnet sind und deren Lage an die Position der zu schaltenden Koppelelemente (6a) der Kupplungsteile (2) angepasst ist.

11. Kupplung nach Anspruch 10,
**dadurch gekennzeichnet,**
**dass** die Vertiefungen (22) der einen Stirnseite (24) gegenüber denen der anderen Stirnseite (24) um etwa 90° verdreht angeordnet sind.

## Claims

1. Clutch for gear change in a selector hub transmission with a driving clutch part and at least one driven clutch part, wherein the one clutch part comprises a mobile coupling element and the other clutch part comprises a counter-profile with at least one recess to receive a drive edge of the coupling element, and wherein the drive edge of the mobile coupling element can be moved into or out of the recesses, **characterized in that** at least one coupling element (6a) is pivotably connected with the driving clutch part (2) via a bolt (16) and comprises, acting in each of the two directions of rotation, a drive edge (7), a control protrusion (20) and a joint contour (19), wherein firstly the coupling element (6a) can create the "drive" running state in each direction of rotation via an influence element (10) which is in friction connection with a friction track (9) on the transmission part (14) and forms a carrier connection (17) with the joint contour (19), and secondly the "idle" running state can be created in the transmission irrespective of engagement load and direction of rotation via a control element (21, 21a), in the recess (22) of which a control protrusion (20) of the coupling element (6a) can engage.

2. Clutch according to Claim 1, **characterized in that** the "drive" running state is created in both directions of rotation by the cooperation of one of the two drive edges (7) of the coupling element (6a) with one and the same counter-profile (8) or with the counter-profiles (8) of two different clutch parts (3).

3. Clutch according to Claim 1, **characterized in that** the influencing element (10) is annular in form and is equipped with a carrier (18) which together with the joint contour (19) forms the carrier connection (17), wherein the influencing element (10) is in friction connection with the friction track (9) on a transmission part (3, 14) in relative rotation to the coupling element (6a).

4. Clutch according to Claim 1, **characterized in that** to control the coupling element (6a), at least one recess (22) is arranged at the end (24) of the rotationally fixed but axially mobile control element (21) which must have a relative rotation speed to the clutch part (2) carrying the coupling element (6a), in order to be able to slide the recess (22) below a control protrusion (20).

5. Clutch according to Claim 1, **characterized in that** the coupling element (6a), depending on direction of rotation of one of the transmission parts (3, 14) in relative rotation to the coupling element (6a), to the clutch part (2) carrying the coupling element (6a), can assume a rotationally fixed connection either in one rotation direction or the other, and that however it can also be held in the "idle" running state by both control protrusions (20) of the coupling element (6a) resting on an outer diameter (23) on the control element (21).

6. Clutch according to Claim 1, **characterized in that** two driving clutch parts (2) each carrying at least one coupling element (6a), viewed in the axial direction, are arranged lying behind each other on a transmission axis, wherein firstly the coupling elements (6a) can each be brought into the "drive" running state with an influencing element (10), and secondly to bring the coupling elements (6) into the "idle" running state, a common, rotationally fixed but axially mobile control element (21) is arranged between the two driving clutch parts (2).

7. Clutch according to Claim 6, **characterized in that** the control element (21), to secure the "idle" running state for the coupling element (6a) concerned, is pushed into the pivot plane thereof, whereby the outer diameter (23) of the control element (21) prevents engagement of the coupling element (6a) in the counter-profile (8), while the other coupling element (6a) is brought by the influencing element (10) into the necessary engagement.

8. Clutch according to Claim 6, **characterized in that** to bring the coupling elements (6a) into the "idle" running state by the control element (21), a relative rotation speed is required between the control element (21) and the clutch parts (2) in order to be able to lift the control protrusion (20) on the coupling element (6a) out of the corresponding recess (22) on the ends (24) of the control element (21) at the level of the outer diameter (23).

9. Clutch according to Claim 8, **characterized in that** the control element (21) is formed tubular and at both its end faces (24) has at least one recess (22) with which alternately the coupling elements (6a) in engagement with the counter-profile (8) can be lifted out and brought into the "idle" running state.

10. Clutch according to Claim 9, **characterized in that** the recesses (22) on the one end face (24) are arranged not coincident with but offset to the recesses (22) on the other end face and their position is adapted to the position of the coupling elements (6a) to be selected of the clutch parts (2).

11. Clutch according to Claim 10, **characterized in that** the recesses (22) on the one end face (24) are arranged twisted by around 90 ° in relation to those of the other end face (24).

## Revendications

1. Embrayage de changement de vitesses dans une transmission de changement de vitesses à moyeu, comprenant une partie d'embrayage menante et au moins une partie d'embrayage menée, l'une des parties d'embrayage présentant un élément d'accouplement mobile et l'autre des parties d'embrayage présentant un profilé conjugué avec au moins un évidement pour recevoir une arête d'entraînement de l'élément d'accouplement, et l'arête d'entraînement de l'élément d'accouplement mobile pouvant être déplacée dans les évidements ou hors des évidements,
**caractérisé en ce**
**qu'**au moins un élément d'accouplement (6a) est connecté de manière pivotante à la partie d'embrayage menante (2) par le biais d'un boulon (16) et présente une arête d'entraînement respective (7) agissant dans les deux sens de rotation, une saillie de commande (20) ainsi qu'un contour d'assemblage (19), l'élément d'accouplement (6a) pouvant d'une part établir dans chaque sens de rotation l'état de marche "d'entraînement" par le biais d'un élément d'action (10) en liaison par engagement par friction avec une piste de roulement à friction (9) sur la partie de transmission (14), lequel élément d'action (10) forme avec le contour d'assemblage (19) une liaison d'entraînement (17), et d'autre part l'état de marche de "marche à vide" pouvant être établi par le biais d'un élément de commande (21, 21a) dans le renfoncement (22) duquel une saillie de commande (20) de l'élément d'accouplement (6a) peut venir en prise indépendamment de la charge d'engagement et du sens de rotation dans la transmission.

2. Embrayage selon la revendication 1,
**caractérisé en ce que**
l'état de marche "entraînement" est établi dans les deux sens de rotation par la coopération de l'une des deux arêtes d'entraînement (7) de l'élément d'accouplement (6a) avec un même et unique profilé conjugué (8) ou avec les profilés conjugués (8) de deux parties d'accouplement différentes (3).

3. Embrayage selon la revendication 1,
**caractérisé en ce que**
l'élément d'action (10) est muni d'un dispositif d'entraînement (18), qui forme avec le contour d'assemblage (19) la liaison d'entraînement (17), et est réalisé sous forme annulaire, l'élément d'action (10) étant en liaison d'engagement par friction avec la piste de roulement de friction (9) sur une partie de transmission (3, 14) se trouvant en rotation relative par rapport à l'élément d'accouplement (6a).

4. Embrayage selon la revendication 1,
**caractérisé en ce que**
pour la commande de l'élément d'accouplement (6a), au moins un renfoncement (22) est disposé à l'extrémité (24) de l'élément de commande (21) solidaire en rotation mais déplaçable axialement, qui doit présenter une vitesse de rotation relative par rapport à la partie d'embrayage (2) qui porte l'élément d'accouplement (6a), afin de pouvoir déplacer le renfoncement (22) sous une saillie de commande (20).

5. Embrayage selon la revendication 1,
**caractérisé en ce que**
l'élément d'accouplement (6a), en fonction du sens de rotation de l'une des parties de transmission (3, 14) se trouvant en rotation relative par rapport à l'élément d'accouplement (6a), peut établir une liaison solidaire en rotation par rapport à la partie d'embrayage (2) portant l'élément d'accouplement (6a), soit dans un sens de rotation soit dans l'autre, mais **en ce qu'**il peut aussi être maintenu dans l'état de marche de "marche à vide", par l'appui des deux saillies de commande (20) de l'élément d'accouplement (6a) sur un diamètre extérieur (23) au niveau de l'élément de commande (21).

6. Embrayage selon la revendication 1,
**caractérisé en ce que**
deux parties d'embrayage (2) menantes, portant chacune au moins un élément d'accouplement (6a), sont disposées de manière située l'une derrière l'autre sur un axe de transmission, vu dans la direction axiale, les éléments d'accouplement (6a) pouvant d'une part être commandés avec un élément d'action respectif (10) dans l'état de marche "d'entraînement", et d'autre part un élément de commande commun (21), solidaire en rotation mais déplaçable axialement, étant disposé entre les deux parties d'embrayage menantes (2) pour la commande des éléments d'accouplement (6) dans l'état de marche de "marche à vide".

7. Embrayage selon la revendication 6,
**caractérisé en ce que**
l'élément de commande (21), pour fixer l'état de marche de "marche à vide" pour l'élément d'accouplement concerné (6a), est déplacé dans son plan de pivotement, de sorte que le diamètre extérieur (23) de l'élément de commande (21) empêche un engagement de l'élément d'accouplement (6a) dans le profilé conjugué (8), tandis que l'autre élément d'accouplement (6a) est amené en l'engagement requis dans chaque cas par l'élément d'action (10).

8. Embrayage selon la revendication 6,
**caractérisé en ce que**
pour commander les éléments d'accouplement (6a) dans la position de marche de "marche à vide" par l'élément de commande (21), on a besoin d'une vitesse de rotation relative entre l'élément de commande (21) et les parties d'embrayage (2), afin de pouvoir soulever la saillie de commande (20) sur l'élément d'accouplement (6a) hors du renfoncement correspondant (22) sur les extrémités (24) de l'élément de commande (21) jusqu'au niveau du diamètre extérieur (23).

9. Embrayage selon la revendication 8,
**caractérisé en ce que**
l'élément de commande (21) est réalisé sous forme tubulaire et présente, sur ses deux côtés frontaux (24), à chaque fois au moins un renfoncement (22), avec lequel, de manière sélective, les éléments d'accouplement (6a) se trouvant en prise avec le profilé conjugué (8) peuvent être soulevés et amenés dans l'état de marche de "marche à vide".

10. Embrayage selon la revendication 9,
**caractérisé en ce que**
les renfoncements (22) sont disposés sur l'un des côtés frontaux (24) non en coïncidence, mais de manière décalée par rapport aux renfoncements (22) de l'autre côté frontal, et leur position est adaptée à la position des éléments d'accouplement à commuter (6a) des parties d'embrayage (2).

11. Embrayage selon la revendication 10,
**caractérisé en ce que**
les renfoncements (22) d'un des côtés frontaux (24) sont disposés de manière tournée d'environ 90° par rapport à ceux de l'autre côté frontal (24).
